Europäisches Patentamt

European Patent Office

Office européen des brevets

(11) Publication number: **0 216 888**

**B1**

(12) **EUROPEAN PATENT SPECIFICATION**

(45) Date of publication of patent specification: **23.01.91**

(51) Int. Cl.⁵: **A 23 L 1/317**

(21) Application number: **86902456.2**

(22) Date of filing: **16.04.86**

(86) International application number:
**PCT/GB86/00216**

(87) International publication number:
**WO 86/05955 23.10.86 Gazette 86/23**

(54) COMPOSITIONS COMPRISING PHOSPHATE-CONTAINING EDIBLE ACID SOLUTIONS.

(30) Priority: **16.04.85 GB 8509680**

(43) Date of publication of application:
**08.04.87 Bulletin 87/15**

(45) Publication of the grant of the patent:
**23.01.91 Bulletin 91/04**

(84) Designated Contracting States:
**AT BE CH DE FR GB IT LI LU NL SE**

(56) References cited:
**EP-A-0 099 716**
**EP-A-0 124 254**
**WO-A-82/04444**
**GB-A-1 422 344**
**GB-A-2 004 454**
**US-A-3 515 561**

**Chemical Abstracts, vol 68, no 7, 1968,**
**Columbus, Ohio (US), see page 2759, abstract**
**no 28633m**

(73) Proprietor: **SINTERMATIC S.A.**
**7 Avenue Krieg**
**CH-Geneva (CH)**

(72) Inventor: **TREHARNE, Timothy, John, Mingay**
**Clays, West Lane East Grinstead**
**West Sussex RH19 4HH (GB)**

(74) Representative: **Pett, Christopher Phineas et al**
**Frank B.Dehn & Co. Imperial House 15-19**
**Kingsway**
**London WC2B 6UZ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to compositions comprising phosphate-containing edible acid solutions, and in particular to such solutions for use in the food processing industry.

In British Patent No. 2004454 there is described a method and apparatus for the production of edible protein-containing products, and in particular sausages, having skins generated thereon by the action of an acid, generally pumped onto the product surface through a sintered stainless steel mould in which the product is formed.

As is described in International Patent Application Publication No. WO82/04444, when acetic acid is passed through sintered stainless steel there is a significant crevice corrosion problem. The solution to that crevice corrosion problem proposed in the International Patent Application involved regularly flushing the sintered stainless steel moulds with phosphate-containing solutions. In practice, the sintered stainless steel moulds were flushed with phosphate-containing solutions before the apparatus was turned off at the end of every working day.

To try and avoid the need for a separate phosphate flushing operation, a buffered acetic acid solution was developed in collaboration with BP Chemicals Limited and is described in European Patent Application Publication No. 99716A. While this buffered solution was found adequate in its ability to generate a skin on the edible protein-containing products and while the crevice corrosion was marginally reduced, the corrosion was not eliminated and even when using the buffered acid, a regular phosphate flush of the sintered stainless steel moulds was still required in order that clogging of the pores of the moulds could be avoided. This extra step remains an inconvenience and expense.

There therefore exists a need for an edible acid solution which, at an acid content capable of generating a 'skin' on the protein-containing emulsion from which protein products such as sausages are made, does not cause significant corrosion or pore blocking of sintered stainless steel over an extended period of time such as the period of a week-end shut-down or longer.

For practical applicability an acid solution for generating skins on protein products should be available in concentrate form requiring only dilution with water before use in order that transportation costs may be minimised. Although concentrated acetic acid and food grade phosphates react together and although food grade phosphates are somewhat poorly soluble in water, we have surprisingly found that by a multi-stage mixing process a concentrated phosphate-containing acetic acid solution may be prepared which when diluted does not give crevice-corrosion problems with sintered stainless steel and which generates an acceptable skin on protein products.

According to one aspect of the invention we therefore provide an acid concentrate for use in foodstuffs production comprising:

(a) one part by weight of a food grade phosphate;

(b) from 3 to 20, preferably from about 9 to 14, parts by weight of an edible acid, preferably acetic acid; and

(c) from $\frac{1}{2}$ to 4, preferably from about $\frac{1}{2}$ to 2, parts by weight of water.

According to a further aspect of the invention we provide a phosphate-containing edible acid solution for use in foodstuffs production comprising

(a) one part by weight of a food grade phosphate;

(b) from 3 to 20, preferably from about 9 to 14, parts by weight of an edible acid, preferably acetic acid; and

(c) from 4 to 604, preferably from about 36 to 604, and most preferably from 36 to 554 parts by weight of water.

Solutions having this constitution, whether prepared by dilution of a concentrate of the invention or by separate admixture of the ingredients in the desired proportions, generally correspond to concentrates of the invention diluted with from 8 to 24 times their own weight of water.

According to a yet further aspect of the invention we provide a process for preparing an acid concentrate according to the invention, the said process comprising the following stages:

(a) dissolving one part of a food grade phosphate in water, preferably from 4 to 9 parts of water;

(b) adding to the solution formed in step (a) from about 1 to 6, preferably about 4 to 5, parts of edible acid;

(c) adding food grade phosphate to the mixture formed in step (b) optionally together with or preceded by the addition of water;

(d) if required, adding edible acid to the mixture formed in step (c) optionally together with or preceded by the addition of water; and

(e) if required, repeating steps (c) and (d) until the desired concentration levels of the finished concentrate are reached.

The concentrate of the invention when diluted with 8—24 times its own weight of water produces a phosphate-containing edible acid solution which advantageously has a pH of about 3 to 4 and may be used in foodstuffs manufacture, in particular to generate a coagulated "skin" on edible protein-containing products such as sausages.

The edible acid employed will most preferably be acetic acid though other acids such as citric, tartaric, fumaric, malic, maleic and ascorbic acids may be employed.

It will be realised that in certain circumstances, water as such may not need to be added if the acid itself is provided in the form of a water-containing mixture. Other acids, however, are solid when pure and so water will need to be added.

In comparison with the use, for example, of acetic acid solutions not containing phosphates, for which a pH of about 2—2.5 is required, we have found that the dilute solutions of the invention may readily be washed from the product surface once sufficient coagulation has occurred by means of a short duration water spray (e.g. 1 to 5 seconds). In contrast, acetic acid solutions containing no phosphate require neutralization with an alkaline spray or submersion in a long duration (e.g. 20 minutes) water bath to arrest the coagulation and remove the taste and odour of acetic acid. The use of either of these procedures is disadvantageous. The use of the long water bath is disadvantageous as it may lead to blanching of the products and an uptake of water, and the use of an alkaline spray can lead to uncontrollable pH changes on the surface of the food product.

The total food acid content of the dilute solution of the invention is advantageously about 3—10% by weight, the higher concentrations being used when the soluble protein concentration of the food product to be treated is low and *vice versa*.

The dilute solution of the invention has the further advantage over non-phosphate containing edible acid solutions in that the phosphate appears to add to the slip-properties both of the food product surface when this is formed and the acid surface treated in a sintered stainless steel mould, so making the ejection of the product from a cylindrical mould easier and yielding a product with a brighter surface finish.

As food grade phosphates for use in the present invention, trisodium anhydrous phosphate (TAP) and sodium tripolyphosphate (STP) are particularly suitable. Such phosphates are widely available.

STP is particularly suitable as its water solubility (ca. 14% at 10°C) is higher than that of TAP rendering the production of the concentrate simpler.

In a preferred embodiment of particular application to the manufacture of breakfast sausages, the dilute solutions of the invention further contain a stabilizer or thickener, preferably an alginate and/or a cellulose derivative such as carboxymethylcellulose. Surface treatment with such dilute solutions according to the invention during the normal cycle time of the basic process, which is very short, provides sausages with the ability to form a "hydrocolloidal skin" which is light-reflective after cooking of the sausages thus giving them a livelier, brighter and generally more appetizing appearance than sausages which are cooked after being produced using an acid treatment process such as described in British Patent 2004454. Such thickeners or stabilizers are advantageously each present in the solutions of the invention in sufficient amounts to be present in the solutions diluted for use at 0.1 to 2% by weight, and depending upon the thickener or stabilizer used and the viscosity of the resulting diluted solution, a level of about 0.25% by weight may be the maximum desirable.

Dilute solutions of the invention which contain a thickener or stabiliser such as carboxy-methylcellulose may, if desired, be prepared and used just prior to use in view of their susceptibility to degradation.

The concentrate, and the more dilute solutions of the invention may also contain a sugar or sugar-containing substance. Such a sugar will generally be of lower sweetness relative to sucrose, e.g. dextrose so as not significantly to impart undesired sweetness to the taste. The presence of such a sugar may serve to nullify any unwanted taste resulting from incomplete washing off of the diluted solution from the surface of the food product. The sugar also assists in contributing to a satisfactory "maillard" reaction, i.e. a browning of the food product, which may take place more rapidly, when the sausage is cooked. This generally is more acceptable to the consumer. The sugar, e.g. dextrose, fructose, or even dehydrated milk powder (containing lactose) may conveniently be used in quantities sufficient to produce a concentration of 0.5 to 3% of the sugar in the dilute solution.

The concentrate, and the diluted solutions of the invention may also contain a surfactant. Such a material has been found to work well in assisting the avoidance of a build-up of any fat on the surface of the sintered stainless steel. Desirably any such surfactant will be present in an amount which will constitute from approximately ½ to 1% by weight of diluted solution passing through apparatus in which food products are prepared.

Sintered stainless steel moulds forming part of the apparatus described in British Patent 2004454 and through which the dilute solution of the invention has been passed for up to 40 weeks have been left without a further phosphate flush for periods of up to 4 weeks without noticeable crevice corrosion or pore clogging occurring. This has been found to be a considerable operating advantage.

Embodiments of the invention will now be further illustrated by the following Examples in which, as in the rest of this specification, parts and percentages are by weight unless otherwise specified.

### Example 1 (Concentrate)

1 part water
2 parts STP
4 parts anhydrous dextrose
20 parts 80% glacial acetic acid
STP is dissolved to saturation in the water, whereafter the acid and dextrose are added and mixed. The remaining STP is then dissolved in the resulting solution.

### Example 2 (Dilute Solution)

The concentrate of Example 1 was diluted with water 1:12 to produce a solution of pH from 3 to 3.5 useable in a process for the manufacture of foodstuffs by the method described in British Patent Specification No. 2004454.

### Example 3 (Dilute solution)

4.86 parts water
1 part STP
12 parts 80% glacial acetic acid
The STP is dissolved in the water to produce a solution of pH about 8.9 to which the acid is then added yielding a solution of pH about 3.5.

Example 4 (Concentrate)
1.71 parts water
1 part STP
1 part anhydrous dextrose (Trudex)
10 parts 80% glacial acetic acid
STP is dissolved to saturation in the water. 5 parts of the 80% acid are added together with the dextrose and the solution is mixed. The remaining STP is then dissolved in the solution and the remaining acid is then mixed in.

Example 5 (Dilute solution)
The concentrate of Example 1 was diluted 1:16 with water. There was then added 0.25% by weight of carboxymethylcellulose. The solution was used to prepare breakfast sausages in the manner described in British Patent Specification No. 2004454.

**Claims**

1. An acid concentrate for use in foodstuffs production comprising:
(a) one part by weight of a food grade phosphate;
(b) from 3 to 20 parts by weight of an edible acid;
(c) from $\frac{1}{2}$ to 4 parts by weight of water.

2. An acid concentrate as claimed in claim 1 comprising:
(a) one part by weight of a food grade phosphate;
(b) from 9 to 14 parts by weight of an edible acid;
(c) from $\frac{1}{2}$ to 2 parts by weight of water.

3. An acid concentrate as claimed in claim 1 or claim 2 wherein the edible acid is acetic acid.

4. An acid concentrate as claimed in any of claims 1 to 3 wherein the food grade phosphate is trisodium anhydrous phosphate or sodium tripolyphosphate.

5. A process for the preparation of an acid concentrate as claimed in any of claims 1 to 4 which comprises:
(a) dissolving one part of a food grade phosphate in water;
(b) adding to the solution formed in step (a) from about 1 to 6 parts of edible acid
(c) adding food grade phosphate to the mixture formed in step (b) optionally together with or preceded by the addition of water;
(d) if required, adding edible acid to the mixture formed in step (c) optionally together with or preceded by the addition of water; and
(e) if required, repeating steps (c) and (d) until the desired concentration levels of the finished concentrate are reached.

6. A phosphate-containing edible acid solution for use in foodstuffs production which comprises an acid concentrate as claimed in any of claims 1 to 4 diluted with from 8 to 24 times by weight of water.

7. A phosphate-containing edible acid solution for use in foodstuffs production which comprises
a) one part by weight of a food grade phosphate;
b) from 3 to 20 parts by weight of an edible acid;
c) from 4 to 604 parts by weight of water.

8. A phosphate-containing edible acid solution as claimed in claim 6 or claim 7 wherein the edible acid content is from 3 to 10% by weight.

9. A phosphate-containing edible acid solution as claimed in any of claims 6 to 8 which further contains from 0.1 to 2% by weight of a thickener or stabiliser effective to produce a light-reflective skin on the foodstuff when cooked.

10. A phosphate-containing edible acid solution as claimed in any of claims 6 to 9 which further contains from 0.5 to 3% by weight of a sugar-containing substance.

11. A phosphate-containing edible acid solution as claimed in any of claims 6 to 10 which further contains from 0.5 to 1% by weight of a surfactant.

12. A process for the preparation of a phosphate-containing edible acid solution for use in foodstuffs production as claimed in claim 7 which comprises either
a) diluting a concentrate as claimed in any of claims 1 to 4 with from 8 to 24 times its weight of water, or
b) bringing into admixture a food grade phosphate, edible acid and water in proportions whereby a solution having the desired concentration is produced.

13. A method for the preparation of protein-containing products having skins generated thereon by the action of an acid, wherein the skins are generated by the action of a solution as claimed in any of claims 6 to 11.

**Patentansprüche**

1. Säurekonzentrat zur Verwendung in der Nahrungsmittelherstellung, gekennzeichnet durch
(a) 1 Gewichtsteil eines nahrungsmittelverträglichen Phosphats;
(b) 3—20 Gewichtsteile einer Speisesäure;
(c) 1/2 bis 4 Gewichtsteile Wasser.

2. Säurekonzentrat nach Anspruch 1, gekennzeichnet durch
(a) 1 Gewichtsteil eines nahrungsmittelverträglichen Phosphats;
(b) 9—14 Gewichtsteile einer Speisesäure;
(c) 1/2 bis 2 Gewichtsteile Wasser.

3. Säurekonzentrat nach Anspruch 1 oder 2, dadurch gekennzeichnet, dass die Speisesäure Essigsäure ist.

4. Säurekonzentrat nach einem der Ansprüche 1 bis 3, dadurch gekennzeichnet, dass das nahrungsmittelverträgliche Phosphat anhydrides Trinatriumphosphat oder Natrium oder Tripolynatriumphosphat ist.

5. Verfahren zur Herstellung eines Säurekonzentrats nach Ansprüchen 1 bis 4, gekennzeichnet durch
(a) Lösen von 1 Teil eines nahrungsmittelverträglichen Phosphats in Wasser;
(b) Zusatz zu der nach (a) hergestellten Lösung von etwa 1—6 Teilen Speisesäure;
(c) Zusatz von nahrungsmittelverträglichem Phosphat zu dem nach (b) hergestelltem Gemisch wahlweise zusammen mit oder nach dem Zusatz von Wasser;

(d) ggfs. Zusatz von Speisesäure zu dem nach (c) hergestelltem Gemisch wahlweise zusammen mit oder nach dem Zusatz von Wasser;

(e) ggfs. Wiederholung von Schritt (c);

(f) bis die gewünschte Konzentrationspegel des fertigen Konzentrats erreicht sind.

6. Phosphat enthaltende Speisesäurelösung zur Verwendung in der Nahrungsmittelherstellung, gekennzeichnet durch ein Säurekonzentrat nach einem der Ansprüche 1 bis 4 in 8—24-facher Verdünnung des Wassergewichts.

7. Phosphat enthaltende Speisesäurelösung zur Verwendung in der Nahrungsmittelherstellung, gekennzeichnet durch

(a) 1 Gewichtsteil eines nahrungsmittelverträglichen Phosphats;

(b) 3—20 Gewichtsteile einer Speisesäure;

(c) 4—604 Gewichtsteile Wasser.

8. Phosphat enthaltende Speisesäurelösung nach Anspruch 6 oder 7, dadurch gekennzeichnet, dass der Speisesäuregehalt 3—10 Gewichtsprozent beträgt.

9. Phosphat enthaltende Speisesäurelösung nach einem der Ansprüche 6—8, dadurch gekennzeichnet, dass sie zusätzlich 0.1 bis 2 Gew.% eines Verdickers oder Stabilisators enthält, der eine lichtreflektierende Schicht auf dem gekochten Nahrungsmittel bildet.

10. Phosphat enthaltende Speisesäurelösung nach einem der Ansprüche 6 bis 9, dadurch gekennzeichnet, dass diese 0.5 bis 3 Gew.% einer Zucker enthaltenden Substanz aufweist.

11. Phosphat enthaltende Speisesäurelösung nach einem der Ansprüche 6—10, dadurch gekennzeichnet, dass diese 0.5 bis 1 Gew.% einer oberflächenaktiven Substanz enthält.

12. Verfahren zur Herstellung einer Phosphat enthaltenden Speisesäurelösung zur Verwendung in der Lebensmittelherstellung nach Anspruch 7, gekennzeichnet durch

a) Verdünnung eines Konzentrats nach einem der Ansprüche 1—4 mit dem 8—24-Fachen seines Wassergewichts, oder

b) Vermischung eines nahrungsmittelverträglichen Phosphats mit einer Speisesäure und Wasser in Verhältnissen, die eine Lösung der gewünschten Konzentration ergeben.

13. Verfahren zur Herstellung von Protein enthaltenden Produkten, auf denen eine Haut durch die Wirkung einer Säure gebildet ist, dadurch gekennzeichnet, dass die Haut durch die Wirkung einer Lösung nach einem der Ansprüche 6—11 entsteht.

## Revendications

1. Concentré acide destiné à être utilisé pour préparer des denrées alimentaires et comprenant:

a. une partie en poids de phosphate de qualité alimentaire;

b. de 3 à 20 parties en poids d'un acide comestible;.

c. de 1/2 à 4 parties en poids d'eau.

2. Concentré acide suivant la revendication 1, comprenant.

a. Un partie en poids d'un phosphate de qualité alimentaire;

b. de 9 à 14 parties en poids d'un acide comestible;

c. de 1/2 à 4 parties en poids d'eau.

3. Concentré acide suivant la revendication 1 ou 2, dans lequel l'acide comestible est l'acide acétique.

4. Concentré acide suivant l'une quelconque des revendications 1 à 3, dans lequel le phosphate de qualité alimentaire est le phosphate trisodique anhydre ou le tripoly phospate de sodium.

5. Procédé de préparation d'un concentré acide suivant l'une quelconque des revendications 1 à 4 qui consiste:

a. à dissoudre une partie d'un phosphate de qualité alimentaire dans l'eau;

(b) à ajouter à la solution formée au stade A de 1 à 6 parties environ d'un acide comestible

(c) à ajouter un phosphate de qualité alimentaire au mélange formé au stade (b), le cas échéant en même temps que l'addition d'eau ou précédé de l'addition d'eau;

(d) si nécessaire, à ajouter un acide comestible au mélange formé au stade (c), le cas échéant, en même temps que l'addition d'eau ou précédé de l'addition d'eau;

(e) si nécessaire à reprendre les stades (c) et (d) jusqu'à ce que soient atteints les niveaux souhaités de concentration du concentré fini.

6. Solution d'acide comestible, contenant du phosphate et destinée à être utilisée pour la production de denrées alimentaires, qui comprend un concentré acide suivant l'une quelconque des revendications 1 à 4 dilué par de l'eau à raison de 8 à 24 fois en poids.

7. Solution d'acide comestible, contenant un phosphate et destinée à être utilisée pour la préparation de denrées alimentaires, qui comprend:

a. une partie en poids d'un phosphate de qualité alimentaire;

b. de 3 à 20 parties en poids d'un acide comestible;

c. de 4 à 604 parties en poids d'eau.

8. Solution d'acide comestible contenant un phosphate suivant la revendication 6 ou 7, dans laquelle la teneur en acide comestible est comprise entre 3 à 10% en poids.

9. Solution d'acide comestible contenant un phosphate suivant l'une quelconque des revendications 6 à 8, qui contient, en outre, de 0,1 à 2% en poids d'un agent épaississant ou d'un agent stabilisant propre à donner une peau réfléchissant la lumière aux denrées alimentaires quand elles sont cuites.

10. Solution d'un acide comestible contenant un phosphate suivant l'une quelconque des revendications 6 à 9, qui contient, en outre, de 0,5 à 3% en poids d'une substance contenant un sucre.

11. Solution d'acide comestible contenant un phosphate suivant l'une quelconque des revendications 6 à 10, qui contient, en outre, de 0,5 à 1% en poids d'un agent tensio actif.

12. Procédé de préparation d'une solution d'acide comestible, contenant un phosphate et destinée à être utilisée pour la préparation de denrées alimentaires, suivant la revendication 7 qui consiste ou bien

a) à diluer un concentré tel que revendiqué à l'une quelconque des revendications 1 à 4 avec de 8 à 24 fois son poids d'eau, ou bien

b) à mélanger un phosphate de qualité alimentaire un acide comestible et de l'eau en des proportions qui donnent une solution ayant la concentration souhaitée.

13. Procédé de préparation de produits contenant des protéines et sur lesquels sont engendrées des peaux par l'action d'un acide, qui consiste à engendrer les peaux par l'action d'une solution telle que revendiquée à l'une quelconque des revendications 6 à 11.